# EUROPÄISCHE PATENTSCHRIFT

(11) **EP 0 617 065 B1**
(45) Veröffentlichungstag und Bekanntmachung des Hinweises auf die Patenterteilung: **18.07.2001**
(21) Anmeldenummer: 94104596.5
(22) Anmeldetag: 23.03.1994
(51) Int. Cl.: C08F 299/00, C08F 220/12

(54) **Thermoplastisch verarbeitbare Elastomere mit verbesserten optischen Eigenschaften**
Thermoplastic elastomers with improved optical properties
Elastomères thermoplastiques à propriétés optiques améliorées

(30) Priorität: 26.03.1993 DE 4309853
(43) Veröffentlichungstag der Anmeldung: 28.09.1994
(73) Patentinhaber: Röhm GmbH & Co. KG, 64293 Darmstadt (DE)
(72) Erfinder: Siol, Werner, Dr., D-64297 Darmstadt (DE); Koralewski, Klaus, D-64560 Riedstadt (DE)

(56) Entgegenhaltungen:
- EP-A- 0 357 036
- EP-A- 0 381 065
- EP-A- 0 522 376
- US-A- 5 231 131

## Beschreibung

### Gebiet der Erfindung

Die Erfindung betrifft thermoplastisch verarbeitbare Elastomere auf Basis von Kammpolymeren mit verbesserten optischen Eigenschaften, insbesondere hoher Transparenz.

### Stand der Technik

Die von den monomeren "weichen" Acrylsäureestern abgeleiteten Polymeren können in Abhängigkeit von ihrem Gehalt an "harten" Comonomeren die ganze Palette von weichen Elastomeren bis zu harten, nicht-filmbildenden Kunststoffen überstreichen (vgl. Kirk-Othmer 3rd. Ed. Vol. 1, 386 - 408, J. Wiley 1978). Die typischen elastomeren Polyacrylate zeichnen sich durch eine bemerkenswerte Ölresistenz und relativ große thermische Stabilität aus, aber die mechanischen Eigenschaften in der Kälte und bei erhöhten Temperaturen lassen zu wünschen übrig.

In der DE-A 39 02 653 bzw. der US-A 5 155 172 werden Elastomere auf Acrylatbasis beschrieben, die zu mindestens 40 und bis zu 100 Gew.-% aus einem oder mehreren Copolymerisaten mit einem Molekulargewicht größer 50 000 Dalton aufgebaut aus einerseits 50 - 95 Gew.-% Acrylatmonomeren und andererseits Makromonomeren bestehend aus einer vinylischen Gruppe und damit kovalent verbunden einer Polyvinyleinheit ausgewählt aus der Gruppe der Acrylate, der Methacrylate und der ggfls. substituierten Styrole.

Bei entsprechenden Begrenzungen des Molekulargewichts stellen nach der DE-A hergestellte Kammpolymere thermoplastisch verarbeitbare Elastomere (TPE) dar. Kammpolymere mit z.B. einer Polybutylacrylat-Hauptkette und PMMA-Seitenketten sind bei einer guten Anbindung der PMMA-Seitenäste an die Butylacrylat-Hauptkette in der Regel glasklar, obwohl sich der Brechungsindex der PMMA-Hartphase (n_{D}²⁰ PMMA = 1,492) und derjenige der Polybutylacrylat-Phase (n_{D}²⁰ PBuA = 1,466) deutlich unterscheiden.
Eine Erklärungsmöglichkeit liegt in der Annahme von sehr kleinen PMMA-Domänen (Vgl. N.A.J. Platzer Ed. Multicomponent Polymer Systems, Adv. in Chemistry Ser. 99, pp. 12 - 13, American Chemical Society 1971).

### Aufgabe und Lösung

Es liegt indessen im Interesse einer möglichst uneingeschränkten Verarbeitung und Anwendung von thermoplastisch verarbeitbaren Elastomeren (TEP) Systeme zu haben, deren optisches Verhalten konstant und von der Vorbehandlung und den Verarbeitungsbedingungen weitgehend unbeeinflußt ist. Es bestand daher die Aufgabe, TEP's zur Verfügung zu stellen, die unabhängig von Phasenstruktur bzw. Domänengröße die zu fordernden optischen Eigenschaften, insbesondere Transparenz, auch im Gemisch mit PMMA aufweisen. Es wurde nun gefunden, daß sich ausgehend von den Kammpolymeren der DE-A 39 02 653 bzw. der EP-A 0 381 065 thermoplastisch verarbeitbare Elastomere mit verbesserten optischen Eigenschaften erhalten lassen, wenn phenylgruppenhaltige Monomere copolymerisiert werden.
Die Erfindung betrifft demnach thermoplastisch verarbeitbare Elastomere E auf Acrylatbasis, die zu mindestens 40 und bis zu 100 Gew.-% aus einem oder mehreren Kammpolymeren KP mit einem Molekulargewicht größer 50 000 Dalton aufgebaut aus
α) 5 - 50 Gew.-%, vorzugsweise 20 - 40 Gew.-% Makromonomeren MM aufgebaut aus Methylmethacrylat oder Copolymerisaten des Methylmethacrylats mit Comonomeren ausgewählt aus der Gruppe bestehend aus weiteren Methacryl- oder Acrylsäureestern, vorzugsweise von C₁-C₁₂-Alkoholen und gegebenenfalls substituierten Styrolen enthaltend eine endständige Einheit mit einer radikalisch polymerisierbaren Gruppe mit einer Glastemperatur Tg von mindestens 60 Grad C und einem Molekulargewicht im Bereich 500 bis 100 000 Dalton und einem Brechungsindex im Bereich n_{D} 1,48 bis 1,50 und
β) 5 bis 90 Gew.-%, vorzugsweise 50 bis 80 Gew.-% (bezogen auf die Gesamtheit der Monomeren in KP) an Monomeren oder Monomergemischen der Formel I 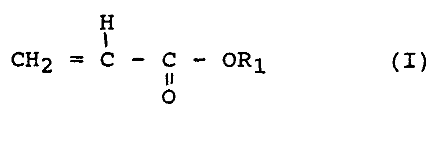 worin
   - R₁: eine Alkylgruppe mit 1 - 12 Kohlenstoffatomen bedeutet und
γ) 5 bis 50 Gew.-%, vorzugsweise 10 bis 30 Gew.-% eines phenylgruppenhaltigen, radikalisch polymerisierbaren Monomern PHM, vorzugsweise stehen dabei die Monomerengruppen β) und γ) im Gewichtsverhältnis 10 zu 1 bis 1 zu 2.

Vorzugsweise steht R₁ in Formel I für C₄-Alkyl, z.B. n-Butyl. Die phenylgruppenhaltigen Monomeren PHM sind vorzugsweise ausgewählt aus der Gruppe bestehend aus den Monomeren der Formel III 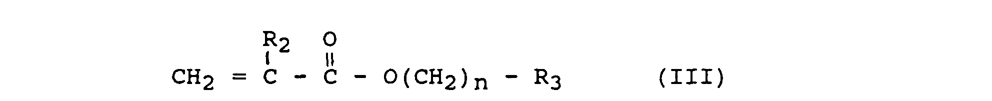 worin
- R₂: für Wasserstoff oder Methyl und
- R3: für einen gegebenenfalls substituierten Phenylrest und
- n: für 0, 1, 2 oder 3 steht oder den Monomeren der Formel IV 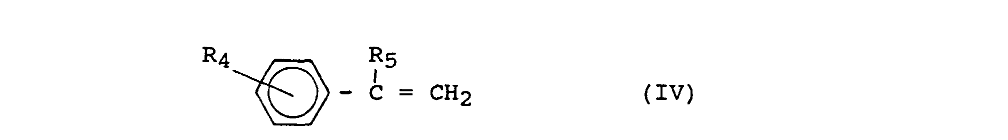
worin
- R₄: für Wasserstoff oder einen Alkylrest mit 1 bis 4 Kohlenstoffatomen und
- R₅: für Wasserstoff oder Methyl steht.

Sofern R₃ für einen substituierten Phenylrest steht, handelt es sich um einen oder zwei C₁-C₄-Alkyl-Reste.

Die Monomeren der Formel I und die phenylgruppenhaltigen Monomeren PHM stehen im allgemeinen im Gewichtsverhältnis 10 zu 1 bis 1 zu 2, insbesondere 3 zu 1 Gew.-%. Vorzugsweise handelt es sich bei den Monomeren PHM um Benzylacrylat. In der Regel ergänzen sich die Anteile der Monomeren unter α), β) und γ) zu 100 Gew.-%.

### Die Makromonomeren

Definitionsgemäß handelt es sich bei Makromonomeren um Polymere mit einer polymerisations-fähigen, insbesondere radikalisch polymerisationsfähigen Endgruppe im Molekulargewichtsbereich 500 bis ca. 100 000, bevorzugt im Molekulargewichtsbereich 2000 bis 50 000. Die Herstellung von Makromonomeren wird in der Literatur eingehend beschrieben [P.F. Rempp. E. Franta, Adv. Polym. Sci. 58, 1 (1984); K. Albrecht, W. Wunderlich, Angew. Makromol. Chem. 145/146, 89 - 100; H. Mark et al. Encyclopedia of Polymer Science & Technology, 2nd. Ed. Vol. 9, 195 - 204, J. Wiley & Sons 1987; P. Rempp, E. Franta, P. Masson and P. Lutz, Progr. Colloid & Polymer Sci. 72, 112 - 118 (1986)]
Makromonomere sind bekanntlich über anionische und kationische "Living polymerization" und über radikalische Polymerisation zugänglich, wobei die polymerisationsfähige Endgruppe gewöhnlich bei der Initiierung oder beim Kettenabbruch eingeführt wird, bzw. durch eine nachfolgende chemische Umsetzung.
Die im Rahmen der vorliegenden Erfindung anzuwendenden Makromonomeren MM sind insbesondere gemäß der Lehre der DE-A 39 02 653 zugänglich.

Von besonderem Interesse sind die bereits in der genannten Offenlegungsschrift angegebenen Makromonomeren bzw. Mischungen der Formel II 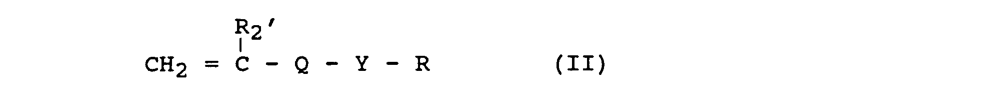 worin
- R₂': für Wasserstoff oder Methyl,
- R: für Wasserstoff oder einen Alkylrest mit 1 bis 24 Kohlenstoffatomen
- Y: für einen Rest 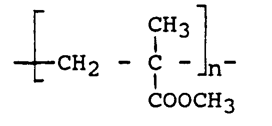 und
- Q: für einen bifunktionellen verbindenden Rest steht und wobei
- n: als eine ganze Zahl so bemessen ist, daß das Molekulargewicht der Makromonomeren im Bereich 500 - 100 000 Dalton liegt.

Der bifunktionelle Rest Q hat vorzugsweise die Bedeutung 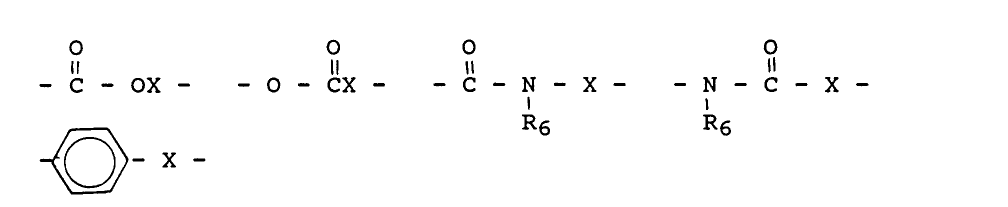 wobei R₆ für Wasserstoff oder einen Alkylrest mit 1 bis 6 Kohlenstoffatomen steht und X für einen Alkylidenrest mit 2 bis 24 Kohlenstoffatomen, bevorzugt für einen Alkylidenrest, der mindestens ein Sauerstoffatom, ein Schwefelatom oder ein Stickstoffatom enthält, steht. Besonders bevorzugt sind Gruppen X der folgenden Typen 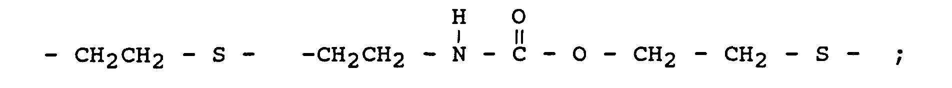 besonders genannt seien beispielsweise Makromonomere der Formel II' 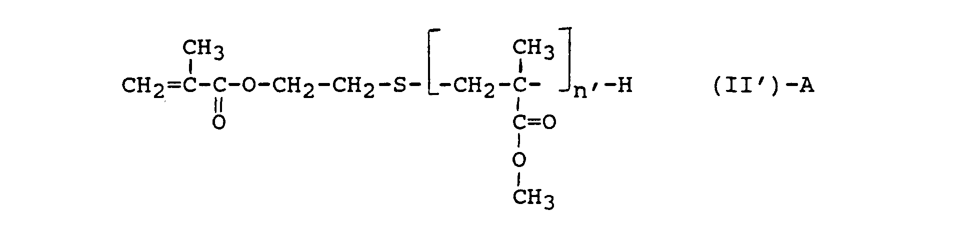 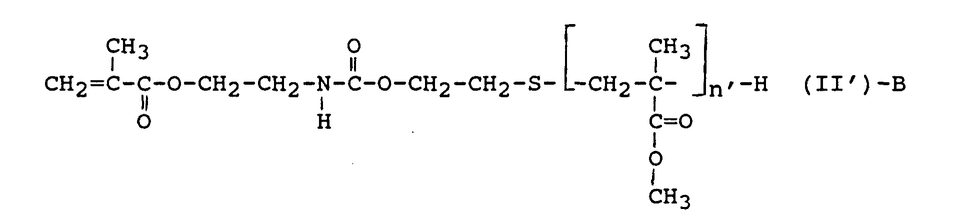 wobei n'für 10 - 500 steht.

Die Herstellung der Makromonomeren MM kann in an sich bekannter Weise erfolgen. Beispielsweise geht man zur Herstellung der Makromonomeren der Formel II' zweckmäßig von der Vorstufe der endständig hydroxylgruppenhaltigen Verbindung der Formel V aus 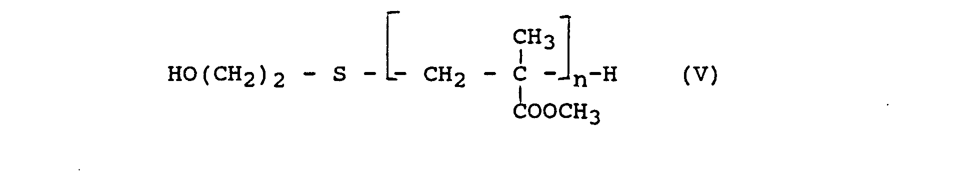 die man mit einem Acylierungsreagenzumsetzt, welches den Methacryloylrest überträgt, beispielsweise mit Methylsäureanhydrid. Dabei kann wie folgt vorgegangen werden:
Vorteilhafterweise bedient man sich der radikalischen Polymerisation (H. Rauch-Puntigam, Th. Völker, Acryl- und Methacrylverbindungen" Springer-Verlag Berlin 1967). Die Bestimmung der Molekulargewichte kann in bekannter Weise z.B. durch Viskositätsmessung oder Gelpermeationschromatographie erfolgen. (Vgl. H.F. Mark et al. Encyclopedia of Polmyer Science & Engineering Vol. 10, 1 - 19, J. Wiley 1987). Die Bestimmung der Glastemperatur Tg geschieht nach Vieweg-Esser, Kunststoff-Handbuch Bd. 9, pg. 333 - 340, Carl Hanser Verlag 1975).
Zur Herstellung der Verbindung der Formel V polymerisiert man in einem geeigneten, mit Rührer und Heizvorrichtung ausgestatteten Reaktor, vorzugsweise unter einem an sich üblichen Schutzgas wie Stickstoff oder Argon, das Methylmethacrylat unter Zusatz von Mercaptoethanol und durch Zugabe eines Radikal-Initiators beispielsweise eines Azo-Initiators wie z.B. Azo-isobutyronitril. Die Polymerisationsdauer liegt zweckmäßig im Bereich eines Arbeitstages. Die gebildete Verbindung der Formel V kann in einem Lösungsmittel wie beispielsweise Aceton aufgenommen und z.B. mit Petrolether ausgefällt werden. Sie kann aber auch unmittelbar zur Umsetzung mit dem Acylierungsreagenz eingesetzt werden.
Die Umsetzung mit dem Acylierungsreagenz, beispielsweise Methacrylsäureanhydrid kann beispielsweise in einem geeigneten inerten Lösungsmittel wie Toluol und in Anwesenheit eines Säureakzeptors wie z.B. einem Trialkylamin, vorzugsweise unter Erwärmen über einen gewissen Zeitraum, beispielsweise während 24 Stunden erfolgen. Die Isolierung der Makromonomeren kann z.B. durch Ausfällen, etwa mit Methanol erfolgen.
Die Synthese der Kammpolymeren KP kann, ausgehend von den Makromonomeren MM in an sich bekannter Weise in Form einer Lösungspolymerisation vorgenommen werden. Als Lösungsmittel kommen beispielsweise Butylacetat oder Toluol infrage.
Vorteilhafterweise gibt man die Makromonomeren MM zusammen mit den Monomeren der Formel I und den phenylgruppenhaltigen Monomeren PHM im Lösungsmittel in einem geeigneten Polymerisationsgefäß mit Rühr- und Heizeinrichtung vor und gibt unter Erwärmen, als Anhalt seien ca. 50 Grad C genannt, den Polymerisationsinitiator in den üblichen Mengen, beispielsweise 0,001 - 1 % bezogen auf die Monomeren, beispielsweise eine peroxidische Verbindung wie tert.Butylperpivalat, vorzugsweise unter einem inerten Schutzgas zu. Die Polymerisation wird über einen gewissen Zeitraum, beispielsweise 10 Stunden fortgesetzt. Die gebildeten Polymerisate lassen sich durch Zusatz beispielsweise von Methanol ausfällen.
Aus den erhaltenen Polymeren lassen sich beispielsweise mit Butylacetat als Lösungsmittel glasklare, farblose Filme ausgießen. Eine alternative Methode zur Gewinnung der Kammpolymeren besteht darin, die Lösung der Kammpolymeren in einem Entgasungsextruder zu entgasen.

Die erfindungsgemäßen thermoplastisch verarbeitbaren Elastomeren EP können noch an sich bekannte Additive wie Stabilisatoren, Verarbeitungshilfsmittel u.ä. in den üblichen Mengen enthalten (vgl. Gaechter-Müller, Kunststoff-Additive, Carl Hanser Verlag 1979; Ullmann's Encyclopedia of Industrial Chemistry, 5th Ed., Vol. A20, S. 459 - 507, VCH 1992).

### Vorteilhafte Wirkungen

Bei den erfindungsgemäßen Kammpolymeren ist der Brechungsindex der elastomeren Polyacrylatphase an den Brechungsindex der "harten" PMMA-Phase angepaßt. Damit eröffnet sich u.a. die Möglichkeit der Einarbeitung in Polymethylmethacrylat, z.B. in PMMA-Formmasse ohne daß Probleme mit der Transparenz des derart schlagzäh modifizierten PMMA auftreten.
Besonders vorteilhaft stellt sich die Ausführungsart mit den Monomeren der Formel III dar, insbesondere mit Benzylacrylat. Benzylacrylat wird beispielsweise auch mit Vorteil zur Schlagzähmodifizierung in PMMA ausgenutzt (vgl. deutsche Patentanmeldung 41 21 652). Während die schlagzähmodifizierten Formmassen des Standes der Technik in aller Regel als durchgehende PMMA-Phase mit eingelagerten, vernetzten Acrylat-Gummi-Teilchen vorliegen, handelt es sich bei den erfindungsgemäßen Kammpolymeren um thermoplastisch verarbeitbare Elastomere mit einer durchgehenden Acrylatphase, die durch eingelagerte PMMA-Hartphasenteilchen physikalisch vernetzt sind. Neben der verbesserten Optik der thermoplastisch verarbeitbaren Elastomeren selbst bietet die optische Anpassung der Acrylat-Phase an die PMMA-Phase insbesondere Vorteile bei der Einarbeitung der TPE in PMMA-Formmassen oder bei der Streckung der TPE mit Polymethylmethacrylat.

Die folgenden Beispiele dienen zur Erläuterung der Erfindung.
Zur Charakterisierung der Polymeren werden die folgenden Bestimmungsmethoden verwendet:

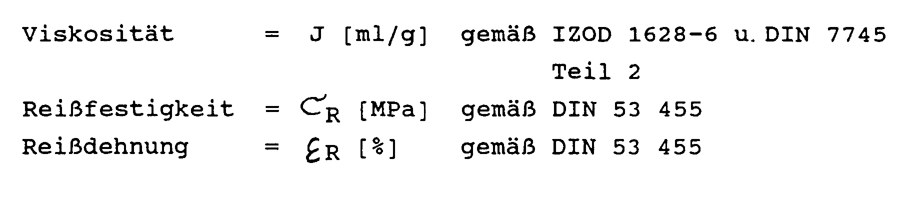

### BEISPIELE

### I. Herstellung der thermoplastisch verarbeitbaren Elastomeren E.

### 1. Kammpolymer mit Polybutylacrylat-benzylacrylat-Hauptkette und PMMA-Seitenkette

90 g eines PMMA-Makromonomeren aus Beispiel 2 (Tg > 100 Grad C) werden mit 157,5 g Butylacrylat und 52,5 g Benzylacrylat in 300 g Butylacetat gelöst und bei 50 Grad C unter Zusatz von 0,05 g Butylperpivalat während 8 Stunden zu einer Lösung des Kammpolymeren polymerisiert. Das Polymer wird mit Methanol ausgefällt (J = 198 ml/g). Aus dem erhaltenen Polymerisat werden aus Butylacetat-Lösung ca. 0,5 mm dicke Filme gegossen. Die so erhaltenen Filme sind glasklar. Sie haben eine Reißdehnung ε R = 486 %; Reißfestigkeit 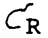 = 10,34 MPa.

### 2. PMMA Makromonomere der Formel (II')-A

Eine Mischung aus 200 g Methylmethacrylat und 4 g Mercaptoethanol und 0,2 g Azoisobuttersäurenitril wird ein einem Kunststoffbeutel unter einem Schutzgas 48 Stunden bei 50 Grad C polymerisiert. Anschließend kann mit Methanol ausgefällt und im Vakuum getrocknet werden (M_{w} = 10 400).
Das so erhaltene Polymerisat der Formel V wird in 320 g Toluol gelöst. Nach Zugabe von 16 g Triethylamin und 16 g Methacrylsäureanhydrid wird unter Inertgas auf 45 Grad C erwärmt und 24 Stunden bei dieser Temperatur belassen. Das Makromonomere wird durch Ausfällen mit Methanol isoliert. J = 12,2 ml/g; Tg > 100 Grad C.

## Patentansprüche

1. Thermoplastisch verarbeitbare Elastomere auf Acrylatbasis bestehend zu mindestens 40 und bis zu 100 Gew.-% aus einem oder mehreren Kammpolymeren KP mit einem Molekulargewicht größer 50 000 Dalton,
dadurch gekennzeichnet,
daß die Kammpolymeren KP aufgebaut sind aus
α) 5 - 50 Gew.-% Makromonomeren MM aufgebaut aus Methylmethacrylat oder Copolymeren des Methylmethacrylats mit Comonomeren ausgewählt aus der Gruppe bestehend aus weiteren Methacrylsäureestern, Acrylsäureestern und Styrolen, enthaltend eine endständige Einheit mit einer radikalisch polymerisierbaren Gruppe mit einer Glastemperatur Tg von mindestens 60 Grad C und einem Molekulargewicht im Bereich 500 - 100 000 Dalton und einem Brechungsindex im Bereich n_{D} 1,48 bis 1,50 und
β) 5 bis 90 Gew.-% (bezogen auf die Gesamtheit der Monomeren in KP) an Monomeren oder Monomergemischen der Formel I 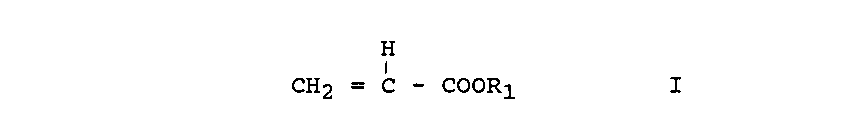 worin R₁ eine Alkylgruppe mit 1 bis 12 Kohlenstoffatomen bedeutet und
γ) 5 bis 50 Gew.-% (bezogen auf die Gesamtheit der Monomeren in KP) eines phenylgruppenhaltigen, radikalisch polymerisierbaren Monomern PHM

2. Thermoplastisch verarbeitbare Elastomere gemäß Anspruch 1, dadurch gekennzeichnet, daß die phenylgruppenhaltigen, radikalisch polymerisierbaren Monomeren PHM ausgewählt sind aus der Gruppe bestehend aus den Monomeren der Formel III 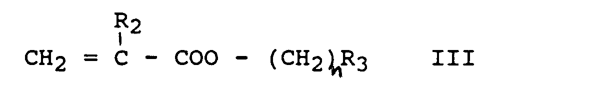 worin
R₂ für Wasserstoff oder Methyl und
R₃ für einen Phenylrest und
n für 0, 1, 2 oder 3 steht
oder Monomeren der Formel IV 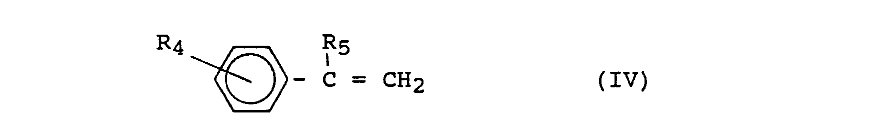 worin R₄ für Wasserstoff oder einen Alkylrest mit 1 bis 4 Kohlenstoffatomen und R₅ für Wasserstoff oder Methyl steht.

3. Thermoplastisch verarbeitbare Elastomere gemäß Anspruch 1, dadurch gekennzeichnet, daß R₁ in Formel I für Butyl steht.

4. Thermoplastisch verarbeitbare Elastomere gemäß den Ansprüchen 1 bis 3, dadurch gekennzeichnet, daß die phenylgruppenhaltigen Monomeren PHM aus den Monomeren der Formel III bestehen, wobei R₂ für Wasserstoff und n für 1, 2 oder 3 steht.

## Claims

1. Thermoplastically workable acrylate-based elastomers comprising at least 40 and up to 100 wt.% of one or more comb polymers KP having a molecular weight of more than 50,000 Daltons, characterised in that the comb polymers KP are made up of
α) 5 - 50 wt.% of macromonomers MM synthesised from methyl methacrylate or copolymers of methyl methacrylate with comonomers selected from among other methacrylic acid esters, acrylic acid esters and styrenes, containing a terminal unit having a radically polymerisable group with a glass transition temperature Tg of at least 60°C and a molecular weight in the range from 500 to 100,000 Daltons and a refractive index in the range n_{D} 1.48 to 1.50 and
β) 5 to 90 wt.% (based on all the monomers in the KP) of monomers or monomer mixtures of formula I 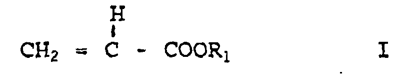 wherein R₁ denotes an alkyl group having 1 to 12 carbon atoms and
γ) 5 - 50 wt.%- (based on all the monomers in the KP) of a radically polymerisable monomer PHM containing phenyl groups.

2. Thermoplastically workable elastomers according to claim 1, characterised in that the radically polymerisable monomers PHM containing phenyl groups are selected from among the monomers of formula III 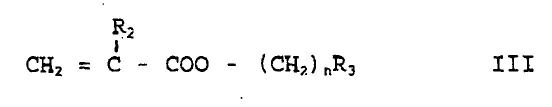 wherein
R₂ denotes hydrogen or methyl and
R₃ denotes a phenyl group and
n denotes 0, 1, 2 or 3
or monomers of formula IV 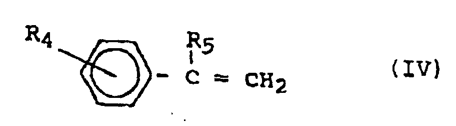 wherein R₄ denotes hydrogen or an alkyl group having 1 to 4 carbon atoms and R₅ denotes hydrogen or methyl.

3. Thermoplastically workable elastomers according to claim 1, characterised in that R₁ in formula I denotes butyl.

4. Thermoplastically workable elastomers according to claims 1 to 3, characterised in that the monomers PHM containing phenyl groups consist of the monomers of formula III, wherein R₂ denotes hydrogen and n denotes 1, 2 or 3.

## Revendications

1. Elastomères thermoplastiques à base d'acrylate constitué à au moins 40 et jusqu'à 100 % en poids d'un polymère en peigne KP ayant un poids moléculaire supérieur à 50 000 daltons,
caractérisé en ce que
les polymères en peigne et KP sont constitués de
α) 5 à 50 % en poids, de macromonomères MM constitués de méthacrylate de méthyle ou de copolymères de méthacrylate de méthyle avec des comonomères choisis dans le groupe constitué par d'autres esters de l'acide méthacrylique, des esters de l'acide acrylique et des styrènes, contenant une unité finale avec un groupe polymérisable par voie radicalaire avec une température de transition vitreuse Tg d'au moins 60°C et un poids moléculaire allant de 500 à 100 000 daltons et un indice de réfraction n_{D} allant de 1,48 à 1,50 et
β) 5 à 90 % en poids, de préférence à 80 % en poids (par rapport à la totalité de monomères dans le KP) de monomères ou de mélanges de monomères de formule I 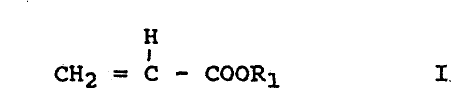 dans laquelle R₁ représente un groupe alkyle ayant de 1 à 12 atomes de carbone et
γ) 5 à 50 % en poids (par rapport à la totalité des monomères dans KP), d'un monomère PHM contenant des groupes phényle et polymérisables par voie radicalaire.

2. Elastomères thermoplastiques selon la revendication 1,
caractérisé en ce que
les polymères PHM contenant des groupes phényle et polymérisables par voie radicalaire sont choisis dans le groupe constitué par les monomères de formule III 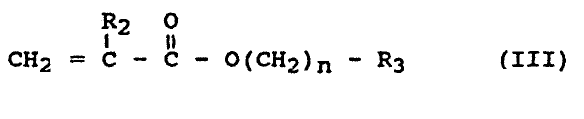 dans laquelle R₂ représente un hydrogène ou un méthyle et R₃ représente un radical phényle et n vaut 0, 1, 2 ou 3, ou les monomères de formule IV 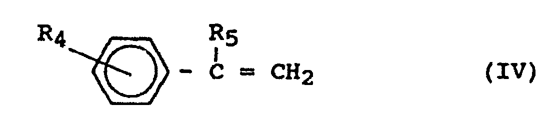 dans laquelle R₄ représente un hydrogène ou un radical alkyle ayant de 1 à 4 atomes de carbone et R₅ représente un hydrogène ou un méthyle.

3. Elastomères thermoplastiques selon la revendication 1,
caractérisé en ce que
R₁ dans la formule I représente le butyle.

4. Elastomères thermoplastiques selon les revendications 1 à 3,
caractérisé en ce que
les monomères PHM contenant des groupes phényle se composent des monomères de formule III dans laquelle R₂ représente un hydrogène et n vaut 1, 2 ou 3.
